# EUROPEAN PATENT APPLICATION

(11) **EP 4 742 405 A1**
(43) Date of publication of application: **13.05.2026**
(21) Application number: 25213932.4
(22) Date of filing: 06.11.2025
(51) Int. Cl.: H01M 50/383, H01M 50/507

(54) **BATTERY MODULE AND BATTERY PACK**

(30) Priority: 08.11.2024 CN 202422737929 U; 08.11.2024 CN 202411599716; 18.12.2024 WO PCT/CN2024/140195
(71) Applicant: Eve Energy Co., Ltd., Huizhou, Guangdong 516006 (CN)
(72) Inventor: REN, Chaoju, Huizhou, Guangdong 516006 (CN); HUANG, Yi, Huizhou, Guangdong 516006 (CN); ZHANG, Guojiang, Huizhou, Guangdong 516006 (CN)
(74) Representative: Berggren Oy

(57) **Abstract**

The invention provides a battery module (1) and a battery pack (2). The battery module (1) includes a plurality of cells (10), an integrated busbar (20) and a fireproof strip (30). A pressure relief valve (111) is arranged on a top of each cell (10), and the integrated busbar (20) is arranged on a side of all tops of the plurality of cells (10). The fireproof strip (30) is arranged on a side of the integrated busbar (20) away from the cells (10). The fireproof strip (30) is provided with a plurality of through hole (31), and each through hole (31) of the plurality of through holes (31) corresponds to one pressure relief valve (111).

## Description

### TECHNICAL FIELD

The invention relates to the field of battery technology, in particular to a battery module and a battery pack.

### BACKGROUND

The battery module includes a plurality of cells. In related technology, after a thermal runaway of a cell, a pressure relief valve of the cell would be opened to release a pressure inside the cell.

### SUMMARY

However, the conductive substances inside the cell, such as pole pieces, graphite and metal particles etc., are ejected upwards along with an air flow inside the cell. The conductive substances can easily cause short circuits in other cells within the battery module, thus resulting in a continuous thermal diffusion.

Embodiments of the invention provide a battery module. The battery module includes a plurality of cells, an integrated busbar and a fireproof strip. Each cell is provided with a pressure relief valve on a top of each cell, and the integrated busbar is arranged on a side of all tops of the plurality of cells. The fireproof strip is arranged on a side of the integrated busbar facing away from the cells, and the fireproof strip is provided with a plurality of through holes, and each through hole of the plurality of through holes corresponds to one pressure relief valve.

The invention also provides a battery pack. The embodiments of the invention provide a battery pack comprising the aforementioned battery module.

### BENEFICIAL EFFECTS

In the embodiments of the invention, a fireproof strip is arranged on a side of the integrated busbar facing away from the cells. The fireproof strip is provided with a plurality of through holes that expose the pressure relief valves on the tops of the cells. When a thermal runaway in a cell appears, the pressure relief valve of the cell opens, and the conductive substances ejected along with the gas can be separated by the fireproof strip, thereby avoiding the technical problem of the continuous thermal diffusion due to the short circuits of other cells in the battery module caused by the contact between the conductive substances and the cells and/or the integrated busbar.

For the battery pack provided in the invention, when a cell undergoes a thermal runaway, a pressure relief valve of the cell opens and the conductive substances ejected along with the gas can be separated by the fireproof strip, thereby avoiding the technical problem of the continuous thermal diffusion due to the short circuits of other cells in the battery module caused by the contact between the conductive substances and the cells and/or the integrated busbar, and improving the safety of the battery pack.

### BRIEF DESCRIPTION OF THE DRAWINGS

Fig. 1 is a three-dimensional schematic view of a battery module according to the embodiments of the invention;
Fig. 2 is a schematic explosion view of a battery module in Fig. 1;
Fig. 3 is an enlarged schematic structure view of a cell in Fig. 1;
Fig. 4A is a schematic view of a top view structure of a fireproof strip in Fig. 2;
Fig. 4B is another schematic view of a top view structure of a fireproof strip in Fig. 2;
Fig. 5A is a schematic explosion view of an integrated busbar in Fig. 2;
Fig. 5B is a schematic top view of a partial structure of a battery module in Fig. 1;
Fig. 6 is an enlarged schematic structure view of a conductive strip in Fig. 5A;
Fig. 7 is an enlarged schematic structure view at point A in Fig. 5A;
Fig. 8 is a schematic structural view of a battery pack according to the embodiments of the invention.

### Reference numerals:

battery module 1;
cell 10, housing 12, cover plate assembly 11, pressure relief valve 111, pole 112, first electrode 113, second electrode 114;
integrated busbar 20, main busbar 21, conductive strip 211, first subpart 2111, second subpart 2112, first weakening part 2113, second weakening part 2114, connecting arm 2115, first busbar end 212, second busbar end 213, bracket 22, groove 221, flexible circuit board 23, connecting piece 231;
fireproof strip 30, through hole 31, insulating part 32, weakening structure 34, insulating film 33;
first direction D1, second direction D2;
battery pack 2.

### DETAILED DESCRIPTION OF THE EMBODIMENTS

Unless otherwise specified in the invention, directional words such as "top" and "bottom" usually refer to the top and bottom of the device under actual conditions of use or working, in particular the directions in the accompanying drawings; and "inside" and "outside" refer to the outline of the device.

In the description of the invention, unless otherwise specified and limited, the term "connected to each other", "connected" or "fixed" is to be construed in a broad sense, for example, as fixedly connected, detachably connected, or integrated; mechanically connected or electrically connected; directly connected to each other or indirectly connected to each other via an intermediary; or internally connected between two elements or interactional between two elements. Meanings of the preceding terms in the invention may be understood according to situations.

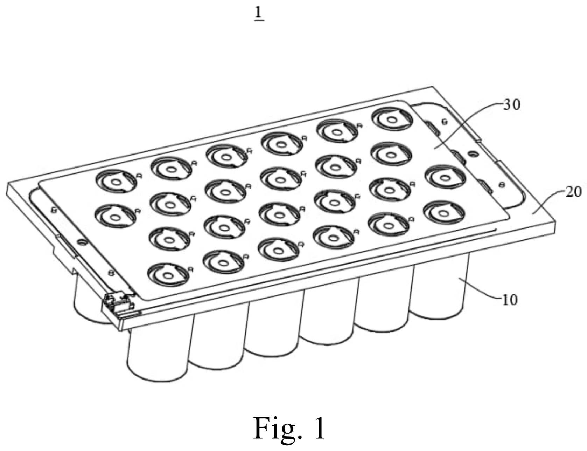

In a first aspect, the embodiments of the invention provide a battery module 1, as shown in Fig. 1 to Fig. 3. The battery module 1 includes a plurality of cells 10, an integrated busbar 20 and a fireproof strip 30. Each cell 10 of the plurality of cells 10 is provided with a pressure relief valve 111 on a top of each cell 10, and the integrated busbar 20 is arranged on a side of all tops of the plurality of cells 10. The fireproof strip 30 is arranged on a side of the integrated busbar 20 away from the cells 10 and is provided with a plurality of through holes 31, and each through hole 31 of the plurality of through holes 31 corresponds to one pressure relief valve 111.

In the present embodiment, the cell 10 may be a cylindrical battery, a square battery or the like. The description of cylindrical battery as an example in the figures of the invention should not be construed as limiting the invention.

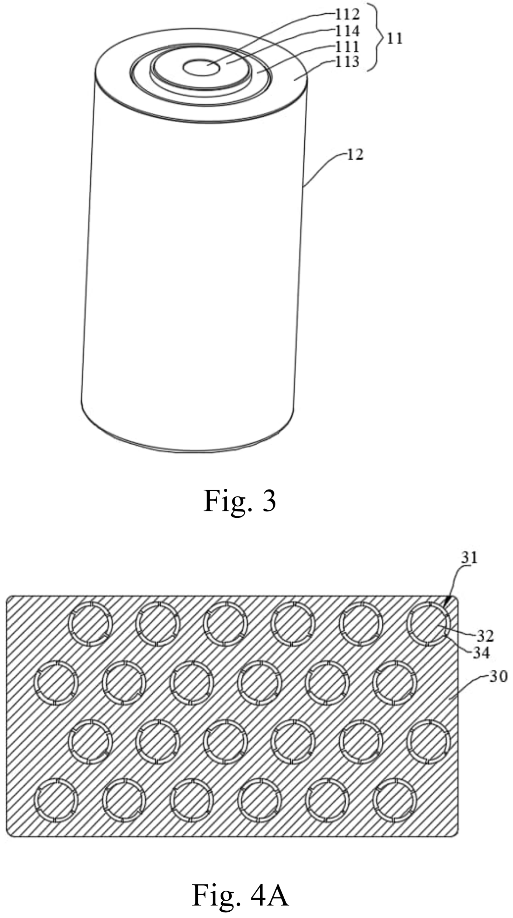

As shown in Fig. 3, the top of the cell 10 refers to an end of the cell 10 provided with a cover plate assembly 11. The cell 10 typically includes a housing 12 provided with an opening. The cover plate assembly 11 is arranged corresponding to the opening of the housing 12, and the cover plate assembly 11 forms a closed accommodating space with the housing 12 to accommodate a pole piece (not shown in figures) and other components arranged inside the housing 12.

A pressure relief valve 111 is provided on the top of the cell 10. The cell 10 includes a top surface and a bottom surface opposite to the top surface, and the surface connected between the top surface and the bottom surface is a side surface. The cover plate assembly 11 is arranged corresponding to the top surface of the cell 10, and the housing 12 is arranged corresponding to the bottom surface and the side surface of the cell 10. The pressure relief valve 111 can be arranged on the cover plate assembly 11. When a thermal runaway in the cell 10 occurs, an air pressure inside the housing 12 increases, and the pressure relief valve 111 opens and an outlet for gas flow is formed. The conductive substances within the cell 10, such as pole pieces, graphite and metal particles, are ejected from the outlet along with the gas. After opening the valve, the gas in the cell 10 can be discharged normally, thus avoiding an explosion of the cell 10 due to the internal high pressure.

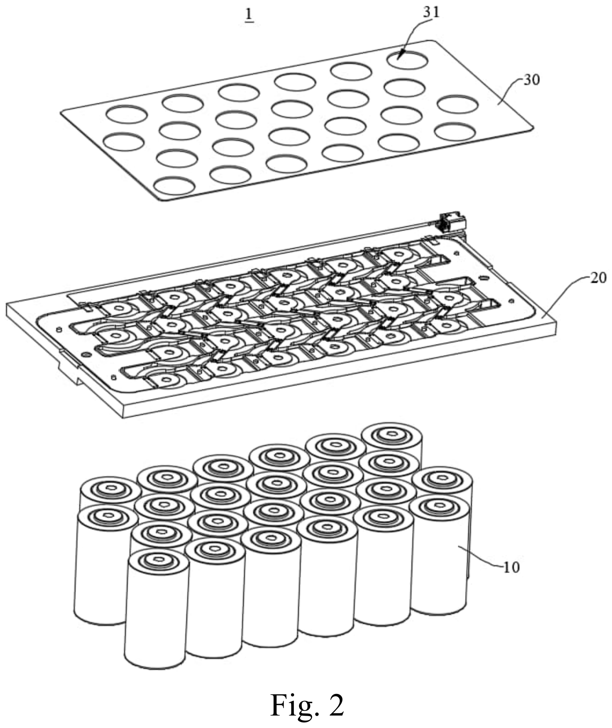

The integrated busbar 20 refers to a CCS (Cells Contact System) assembly. As shown in Fig. 2, the integrated busbar 20 is arranged on a side of all tops of the cells 10. The integrated busbar 20 is mainly configured to achieve the connections of the plurality of cells 10 in series and/or in parallel, to output current. The integrated busbar 20 can also be configured to collect voltage data of the cells, monitor temperatures of the cells, and provide a compensation channel, ensuring safe and stable operation of the battery module 1.

As shown in Fig. 1 and Fig. 2, the fireproof strip 30 is arranged on a side of the integrated busbar 20 facing away from the cells 10. The fireproof strip 30 is provided with a plurality of through holes 31, and each through hole 31 of the plurality of through holes 31 corresponds to a pressure relief valve 111 of a cell 10. The through holes 31 are configured to expose the pressure relief valves 111. When opening the pressure relief valve 111, the ejected gas can be ejected from the through hole 31. Arranging through holes 31 in the fireproof strip 30 can prevent the fireproof strip 30 from blocking the airflow from the opened valve.

The profile of the fireproof strip 30 does not exceed beyond the integrated busbar 20, thereby avoiding any increase of overall dimension of the battery module 1 when the fireproof strip 30 is provided. A plurality of positioning holes can be arranged in the fireproof strip 30, and a plurality of positioning columns can be arranged on the integrated busbar 20 to achieve the positioning and assembly of the fireproof strip 30 and the integrated busbar 20.

The fireproof strip 30 can be made of fireproof insulating material. The fireproof strip 30 can separate the conductive substances ejected with the airflow from the opened valve, preventing the conductive substances from coming into contact with the integrated busbar 20 and/or cells 10, which could cause a short circuit in the adjacent cells 10. After a short circuit in the adjacent cells 10, a continuous thermal runaway would be triggered, which leads to the failure of the battery module 1.

The material for fireproof strip 30 can be selected from fireproof, high temperature resistant and insulating materials. This can not only prevent the conductive substances from coming into contact with the integrated busbar 20 and/or the cells 10, which could cause a short circuit in the adjacent cells 10, but also effectively suppress a thermal diffusion and a thermal propagation of the cells 10 after opening the valve.

In some embodiments, the fireproof strip 30 can be formed by compositing a single-layer or multi-layer material. For example, the fireproof strip 30 can be formed by stacking double-sided adhesive tape, glass fiber fabric and ceramic silicone rubber. The double-sided adhesive tape is configured to bond with the integrated busbar 20, for fixing the fireproof strip 30. The fireproof strip 30 may also be made of other fireproof insulating materials, which is not limited herein.

In some embodiments, the fireproof strip 30 can be made of phase-change materials. Phase-change materials can quickly develop high strength on their surface layers at high temperatures, and at the same time more micropores are generated in the material, resulting in a strong decrease in the thermal conductivity coefficient and a better thermal insulation effect.

When the pressure in the cell 10 reaches to an extent, the pressure relief valve 111 may disconnect from the housing 12 and drop. The position where the pressure relief valve 111 drops is random. When the dropped pressure relief valve 111 is connected to the integrated busbar 20 and/or the adjacent cells 10, it causes a short circuit between the cells 10 in the adjacent two through holes 31 and/or the integrated busbar 20, resulting in a continuous thermal diffusion phenomenon.

With respect to this, as shown in Fig. 4A, in some embodiments, an insulating part 32 is provided within each through hole 31 of the fireproof strip 30, so that the insulating material within the through hole 31 can separate the pressure relief valve 111, thereby preventing the dropped pressure relief valve 111 from causing a short circuit between the cells 10 in adjacent two through holes 31 and/or the integrated busbar 20.

In some embodiments, as shown in Fig. 4A, the insulating part 32 is connected with the fireproof strip 30 by a weakening structure 34. The insulating part 32 within each through hole 31 can be made of the same material as the fireproof strip 30. By the above setting, the insulating part 32 can be integrally formed with the fireproof strip 30, which simplifies the manufacturing process of the insulating part 32.

The mechanical strength of the weakening structure 34 is lower than that of the fireproof strip 30 and the insulating part 32. When the pressure relief valve 111 opens, the airflow from the opened valve can cause the weakening structure 34 to break, thus separating the insulating part 32 from the fireproof strip 30.

Optionally, as shown in Fig. 4A, the weakening structure 34 may be a connecting rib, and it can be a plurality of connecting ribs. The plurality of connecting ribs are arranged at intervals along an edge of the insulating part 32. The plurality of connecting ribs are distributed along a circumferential direction of the through hole 31, and connect the edge of the insulating part 32 with the side wall of the through hole 31. It should be noted that the number and size of the connecting ribs can be adjusted as needed, as long as it is ensured that the connecting ribs can be broken by the ejected airflow when the valve opens.

In some embodiments, the weakening structure 34 may be a notch, and the insulating part 32 and the fireproof strip 30 are connected by a plurality of notches. The material at each notch is relatively weak and can be broken by the ejected airflow when the valve opens. The shape of each notch can be adjusted as required, so that the insulating part 32 is separated from the fireproof strip 30 when the notch breaks.

Due to the weak connection between the insulating part 32 and the fireproof strip 30, when the pressure relief valve 111 opens, the impact force of the airflow can cause the weakening structure 34 to be disconnected, thereby preventing the insulating part 32 from obstructing the airflow. The dropped pressure relief valve 111 can be separated by the insulating part 32, thereby avoiding short circuits between the cells 10 in adjacent two through holes 31 and/or the integrated busbar 20 caused by the dropped pressure relief valve 111.

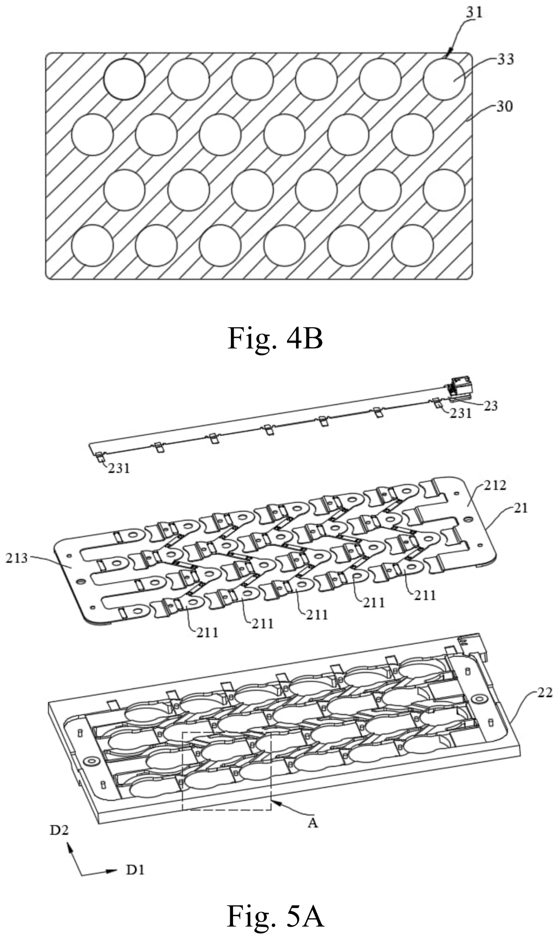

In an embodiment, as shown in Fig. 4B, an insulating film 33 is provided on a side surface of the fireproof strip 30, the insulating film 33 covers the plurality of through hole 31. The thickness of the insulating film 33 is smaller than that of the fireproof strip 30. The insulating film 33 can be glued to the fireproof strip 30. The material for the insulating film 33 can be the same or different than that of the fireproof strip 30. The insulating film 33 can be made from fireproof, high temperature resistant and insulating materials, which can achieve an insulation effect on the one hand, and can also separate the airflow from the opened valve from other cells 10 that have not undergone the thermal runaway on the other hand, thereby preventing other cells 10 that have not undergone the thermal runaway from failing due to the influence of the high temperature airflow.

The thickness of the insulating film 33 is smaller than that of fireproof strip 30. The thickness of the insulating film 33 can be adjusted as required, as long as it is ensured that the insulating film 33 can be broken by the ejected airflow when the valve opens.

When the pressure relief valve 111 opens, the insulating film 33 can be broken by the impact force of the airflow, thereby preventing the insulating film 33 from obstructing the airflow. The dropped pressure relief valve 111 can be separated by the insulating film 33, thereby avoiding short circuits between the cells 10 in adjacent two through holes 31 and/or the integrated busbar 20 caused by the dropped pressure relief valve 111.

In some embodiments, the insulating film 33 can be a whole thin film. When the insulating film 33 is a whole thin film, the processing process of the insulating film 33 is relatively simple.

In some embodiments, the insulating film 33 may further include a plurality of independent insulating subparts, and each insulating subpart is arranged corresponding to one through hole 31.

In an embodiment, as shown in Fig. 3, the cell 10 includes a housing 12 and a cover plate assembly 11. The cover plate assembly 11 forms a closed structure with the housing 12, and the cover plate assembly 11 includes a pole 112 and a pressure relief valve 111. The cover plate assembly 11 is provided with a notch to form the pressure relief valve 111, and the notch is arranged around the pole 112.

In the embodiment, the housing 12 can be made of metal materials such as aluminum, copper, etc. The notch can be the shape of groove, cut, etc. Because the thickness at the notch is smaller than that at other positions, when the pressure inside the cell 10 reaches the threshold when the valve opens, the notch breaks to facilitate pressure relief. The notch is a closed shape that surrounds the pole 112, so that when the valve opens, the pressure relief valve 111 can detach itself together with the pole 112.

The pressure relief valve 111 is connected with the pole 112 in an isolated manner. For example, a sealing ring is provided between the pressure relief valve 111 and the pole 112, and the sealing ring can achieve the connection and sealing between the pressure relief valve 111 and the pole 112. When the pressure relief valve 111 drops, the pole 112 detaches itself together with the pressure relief valve 111, so that the current loop of the cell 10 can be short-circuited, thereby avoiding the influence of the cell 10 that has undergone a thermal runaway on other cells 10.

For example, as shown in Fig. 3, the pressure relief valve 111 is arranged coaxially with the pole 112. The pressure relief valve 111 has a circular ring shape, and the pole 112 is arranged corresponding to the central region of the circular ring of the pressure relief valve 111.

In an embodiment, as shown in Fig. 3, the cover plate assembly 11 includes a first electrode 113 and a second electrode 114 arranged on a same end face of the cell 10 as the pressure relief valve 111. The first electrode 113 is arranged around the pressure relief valve 111, the pressure relief valve 111 is arranged around the second electrode 114, and an outer edge of the first electrode 113 is connected with the housing 12. An inner edge of the first electrode 113 is connected with the pressure relief valve 111 and the second electrode 114 with the pole 112. When the pressure relief valve 111 drops, the second electrode 114 and the pole 112 drop along with the pressure relief valve 111.

One of the first electrode 113 and the second electrode 114 can be a positive electrode and the other is a negative electrode. For example, the first electrode 113 may be a negative electrode and the second electrode 114 is a positive electrode. The first electrode 113 is arranged around the pressure relief valve 111 and may also have a circular ring shape. The first electrode 113 is arranged coaxially with the pole 112.

The inner edge of the first electrode 113 is connected with the pressure relief valve 111, and the outer edge of the first electrode 113 is connected to the housing 12. The inner edge of the first electrode 113 corresponds to the inner edge of the circular ring of the first electrode 113, and the outer edge of the first electrode 113 corresponds to the outer edge of the circular ring of the second electrode 114. The second electrode 114 is connected with the pole 112, for example, the second electrode 114 can be welded with the pole 112. Through the above settings, the first electrode 113, the second electrode 114 and the pressure relief valve 111 can all be arranged at a same end of the housing 12, thereby simplifying the structure of the cell 10 and reducing the process difficulty.

In an embodiment, the pressure relief valve 111 is connected with the second electrode 114.

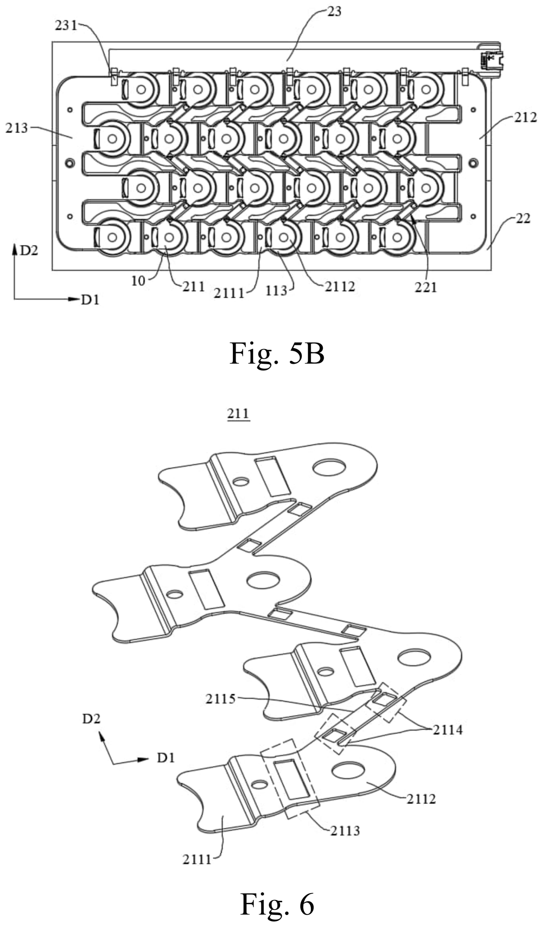

In an embodiment, as shown in Fig. 5A, Fig. 5B and Fig. 6, the integrated busbar 20 includes a main busbar 21. The main busbar 21 includes a plurality of conductive strips 211 arranged along a first direction, and the plurality of conductive strips 211are configured for connecting a plurality of cells 10 in series or in parallel. Each conductive strip 211 includes a first subpart 2111 connected with the first electrode 113, a second subpart 2112 connected with the second electrode 114, and a first weakening part 2113 connecting the first subpart 2111 and the second subpart 2112. The second subpart 2112 and at least one part of the first weakening part 2113 are exposed through the through hole 31, a cross-sectional area of each of the first subpart 2111 and the second subpart 2112 is greater than a cross-sectional area of the first weakening part 2113.

As shown in Fig. 5A and Fig. 5B, the integrated busbar 20 includes a main busbar 21, and the main busbar 21 is configured to achieve the series-parallel connections of the plurality of cells 10 to output current. In particular, the main busbar 21 includes a second busbar end 213, a plurality of conductive strips 211 and a first busbar end 212, which are arranged in succession along the first direction D1. When the first electrode 113 is a negative electrode and the second electrode 114 a positive electrode, the second busbar end 213 can be configured to output a positive voltage, and the first busbar end 212 can be configured to output a negative voltage. The main busbar 21 is configured to connect two adjacent cells 10 in series in the first direction D1 and to connect two adjacent cells 10 in parallel in the second direction D2, where the first direction D1 extends in a length direction of the main busbar 21 and the second direction D2 extends in a width direction of the main busbar 21.

As shown in Fig. 5B and Fig. 6, each conductive strip 211 includes a plurality of first subparts 2111 and a plurality of second subparts 2112. Each first subpart 2111 is connected with the first electrode 113 and each second subpart 2112 is connected with the second electrode 114. The first electrode 113 and the second electrode 114 may not be located in the same horizontal plane. For example, the plane in which the second electrode 114 is located may be higher than the plane in which the first electrode 113 is located, thereby avoiding a short circuit of the main busbar 21 when connecting the first electrode 113 and the second electrode 114.

A first weakening part 2113 is provided between the first subpart 2111 and the second subpart 2112. A cross-sectional area of the first weakening part 2113 is smaller than that of the first subpart 2111, and a cross-sectional area of the first weakening part 2113 is smaller than that of the second subpart 2112. The cross-section of the cross-sectional area is perpendicular to the direction of the current in the conductive strip 211.

The material of the main busbar 21 can be metals such as aluminum and copper etc. Due to the small cross-sectional area of the first weakening part 2113, when a cell 10 has undergone a thermal runaway, the current in the first weakening part 2113 corresponding to the cell 10 increases, resulting in a fusing of the first weakening part 2113. The first weakening part 2113 functions similar to a fuse, and the first weakening part 2113 is configured to disconnect the cell 10 experiencing a thermal runaway from the series circuit, thereby avoiding the effect of the cell 10 that has undergone a thermal runaway on other cells 10.

In an embodiment, the conductive strip 211 includes a second weakening part 2114 connecting two adjacent second subparts 2112, and the second weakening part 2114 is exposed through the through hole 31, a cross-sectional area of the second subpart 2112 is greater than a cross-sectional area of the second weakening part 2114.

A conductive strip 211 includes a plurality of second weakening parts 2114 connecting two adjacent cells 10 along the second direction D2. At least two second weakening parts 2114 are provided between two adjacent cells 10, and the at least two second weakening parts 2114 are each configured to disconnect one of the cells 10. The second weakening part 2114 also acts as a fuse, and its working principle is similar to that of the first weakening part 2113. The difference is that when a thermal runaway occurs in the cell 10, the first weakening part 2113 fuses, while the second weakening part 2114 does not fuse. Only when a short circuit occurs in the integrated busbar 20, will the second weakening part 2114 fuse. That is, when a thermal runaway occurs in a cell 10, although the first weakening part 2113 can be fused in time, the cell 10 that has undergone a thermal runaway cannot be disconnected from a plurality of parallel-connected cells 10, which can easily cause a continuous thermal runaway.

With respect to this, a second weakening part 2114 is provided on the conductive strip 211, and both the first weakening part 2113 and the second weakening part 2114 are exposed through the through hole 31. When the pressure relief valve 111 opens, the second weakening part 2114 can be disconnected under the impact force of the ejected gas, whereby the cell 10 that has undergone a thermal runaway is disconnected from a plurality of cells 10 connected in parallel to further reduce the influence of the cell 10 that has undergone a thermal runaway on other cells 10. In this way, the cell 10, which has undergone a thermal runaway, can be disconnected in time from the parallel circuits, although no short circuit occurs in the integrated busbar 20.

The second subpart 2112 and at least one part of the first weakening part 2113 are exposed through the through hole 31. When the cell 10 has undergone a thermal runaway, the pole 112, the second subpart 2112 and the pressure relief valve 111 detach themself together, and then fly out of the through hole 31 with the airflow from the opened valve. In this way, it can be ensured that the pressure relief valve 111 of the cell 10 opens normally, and the gas inside the cell 10 can be discharged normally, thereby avoiding explosion and detonation of the cell 10.

In an embodiment, as shown in Fig. 2, Fig. 5A, Fig. 5B and Fig. 7, the integrated busbar 20 includes a bracket 22 arranged between the main busbar 21 and the cells 10. The bracket 22 is configured to support the main busbar 21. The conductive strip 211 includes a connecting arm 2115. The two ends of the connecting arm 2115 are each connected with a second weakening part 2114. The bracket 22 is provided with a groove 221, and the connecting arm 2115 is arranged in the groove 221.

As shown in Fig. 5A and Fig. 5B, a support groove is provided on a side surface of the bracket 22 facing the main busbar 21, the support groove is configured to accommodate the main busbar 21. A plurality of openings are further provided in the bracket 22, the openings expose all tops of the cells 10. The main busbar 21 passes through the openings and is electrically connected with the cells 10. In particular, the first subpart 2111 is electrically connected with the first electrode 113, and the second subpart 2112 electrically connected with the second electrode 114.

As shown in Fig. 5B and Fig. 6, the conductive strip 211 includes a plurality of connecting arms 2115 connecting two adjacent cells 10 along the second direction D2. The two ends of each connecting arm 2115 are each provided with a second weakening part 2114. When the second weakening parts 2114 at both ends of each connecting arm 2115 are broken by the airflow from the opened valve, the connecting arm 2115 drops between the two adjacent cells 10, which can easily cause a conduction between housings 12 of the two adjacent cells 10 and cause a short circuit in the circuits.

With respect to this, a groove 221 corresponding to each connecting arm 2115 can be arranged on the bracket 22. When a connecting arm 2115 has been detached, it is carried by the bottom of the groove 221 and cannot drop between two adjacent cells 10.

The integrated busbar 20 can also include a flexible circuit board 23 for collecting and transmitting voltage data. The flexible circuit board 23 is arranged on a side surface of the bracket 22 facing away from the cell 10 and is located at the edge of the bracket 22. The flexible circuit board 23 can be connected with the main busbar 21 via a plurality of connecting pieces 231. An end of each connecting piece 231 is connected with the edge of flexible circuit board 23, and the other end of the connecting piece 231 is connected with the main busbar 21. The material of the connecting piece 231 may be nickel or similar, but is not limited thereto. A connecting piece 231 is connected with the first busbar end 212 correspondingly, and another connecting piece 231 is connected with the second busbar end 213 correspondingly. The plurality of connecting pieces 231 are connected with the plurality of conductive strips 211 in one-to-one correspondence. Through the above settings, grouping of the integrated busbar 20 can be easier and the production efficiency higher.

In an embodiment, the pressure relief valve 111 has a circular ring and the through hole 31 is a circular hole. The diameter of the through hole 31 is larger than the outer diameter of the pressure relief valve 111 and smaller than the outer diameter of the cell 10. The diameter of the through hole 31 is larger than the outer diameter of the pressure relief valve 111, so that the pressure relief valve 111 can easily pass through the through hole 31.

The diameter of the through hole 31 is smaller than the outer diameter of the cell 10, so that the fireproof strip 30 can cover at least a gap between two adjacent cells 10, thereby preventing a conductor in the ejected airflow dropping between two adjacent cells 10 when the pressure relief valve 111 opens and avoiding a short circuit.

Optionally, the cell 10 can be a cylindrical battery or a square battery, but is not limited thereto.

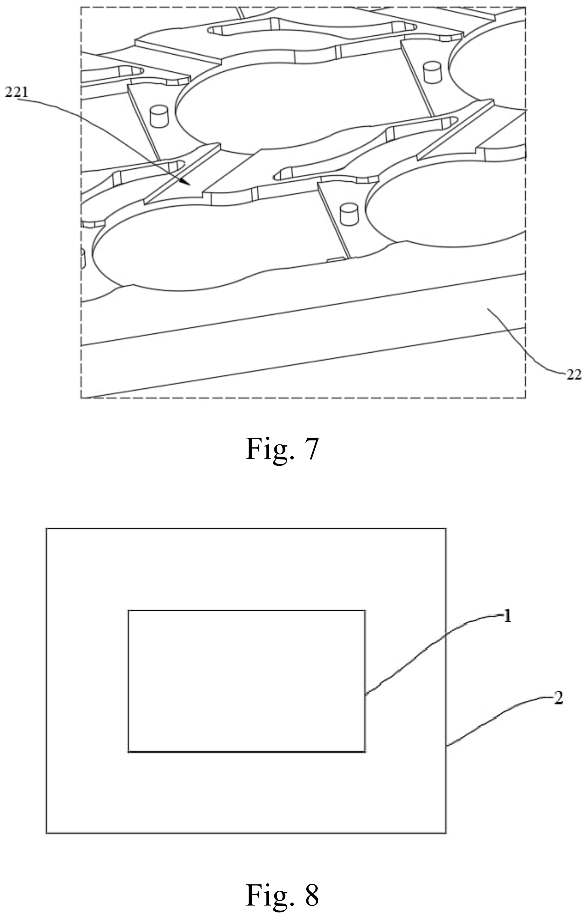

In a second aspect, as shown in Fig. 8, the embodiments of the invention provide a battery pack 2 comprising the aforementioned battery module 1.

In the embodiment, the battery pack 2 may include a plurality of battery modules 1 and a battery box, and the plurality of battery modules are placed within the battery box.

## Claims

1. A battery module (1), **characterized by** comprising:
a plurality of cells (10), each cell (10) of the plurality of cells (10) being provided with a pressure relief valve (111) on a top of each cell (10);
an integrated busbar (20) arranged on a side of all tops of the plurality of cells (10);
a fireproof strip (30) arranged on a side of the integrated busbar (20) away from the cells (10), wherein the fireproof strip (30) is provided with a plurality of through holes (31), and each through hole (31) of the plurality of through holes (31) corresponds to one pressure relief valve (111).

2. The battery module (1) according to claim 1, wherein an insulating part (32) is provided within each through hole (31), and an edge of the insulating part (32) is connected with a side wall of the through hole (31) by a weakening structure (34).

3. The battery module (1) according to claim 2, wherein the weakening structure (34) comprises a plurality of connecting ribs arranged at intervals along the edge of the insulating part (32).

4. The battery module (1) according to any one of claims 1 to 3, wherein a side surface of the fireproof strip (30) is provided with an insulating film (33) covering the plurality of through holes (31), and a thickness of the insulating film (33) is smaller than a thickness of the fireproof strip (30).

5. The battery module (1) according to any one of claims 1 to 4, wherein the pressure relief valve (111) has a circular ring shape, the through hole (31) is a circular hole, and a diameter of the through hole (31) is greater than an outer diameter of the pressure relief valve (111) and smaller than an outer diameter of the cell (10).

6. The battery module (1) according to any one of claims 1 to 5, wherein the cell (10) comprises a first electrode (113) and a second electrode (114) arranged on a same end face of the cell as the pressure relief valve (111), the first electrode (113) is arranged around the pressure relief valve (111), and the pressure relief valve (111) is arranged around the second electrode (114).

7. The battery module (1) according to claim 6, wherein the pressure relief valve (111) is connected with the second electrode (114).

8. The battery module (1) according to claim 6 or 7, wherein the integrated busbar (20) comprises a main busbar (21), the main busbar (21) comprises a plurality of conductive strips (211) arranged along a first direction, and the plurality of conductive strips (211) are configured for connecting a plurality of cells (10) in series; each conductive strip (211) comprises a first subpart (2111) connected with the first electrode (113), a second subpart (2112) connected with the second electrode (114), and a first weakening part (2113) configured for connecting the first subpart (2111) and the second subpart (2112), the second subpart (2112) and at least part of the first weakening part (2113) are exposed through the through hole (31), a cross-sectional area of each of the first subpart (2111) and the second subpart (2112) is greater than a cross-sectional area of the first weakening part (2113).

9. The battery module (1) according to claim 8, wherein each of the conductive strips (211) comprises a second weakening part (2114) connecting two adjacent second subparts (2112), the second weakening part (2114) is exposed through the through hole (31), a cross-sectional area of the second subpart (2112) is greater than a cross-sectional area of the second weakening part (2114).

10. The battery module (1) according to claim 9, wherein the integrated busbar (20) comprises a bracket (22) arranged between the main busbar (21) and the cells (10), the bracket (22) supports the main busbar (21), each of the conductive strips (211) comprises a connecting arm (2115), both ends of the connecting arm (2115) are connected with two adjacent second weakening parts (2114), the bracket (22) is provided with a groove (221), and the connecting arm (2115) is arranged in the groove (221).

11. A battery pack (2), comprising the battery module (1) according to any one of claims 1 to 10.
